# EUROPEAN PATENT SPECIFICATION

(11) **EP 1 965 381 B1**
(45) Date of publication and mention of the grant of the patent: **04.08.2010**
(21) Application number: 07103404.5
(22) Date of filing: 02.03.2007
(51) Int. Cl.: G11B 7/26

(54) **Control Method for Integrated Mastering System**
Steuerungsverfahren für ein integrales Mastering-System
Procédé de commande d'un système de gravure intégré

(43) Date of publication of application: 03.09.2008
(73) Proprietor: Singulus Mastering B.V., 5657 EN Eindhoven (NL)
(72) Inventor: Bookelmann, Theodorus Jacobus Maria, 5657 EN Eindhoven (NL); Kiesebrink, Johannes Petrus Antonius, 5657 EN Eindhoven (NL)
(74) Representative: Vossius & Partner

(56) References cited:
- US-A1- 2003 223 322

## Description

The present invention relates to manufacturing of master discs for optical media and particularly to a method for controlling an integrated mastering system.

Master discs are nowadays generally produced in integrated mastering systems. Integrated mastering systems which include the equipment for cleaning the master disc, coating a photoresist layer, recording the information in a laser beam recorder, developing the recorded master disc and applying a metal layer are known for several years.

For example, EP-A-0 594 255 describes a device for manufacturing a mold for a disc-shaped registration carrier, said device being provided with various treating stations, which are arranged along a line, accommodated in a housing. The stations include a station for applying a photosensitive layer, a station for exposing the photosensitive layer in accordance with the registration data to be stored, a station for developing the photosensitive layer and metallizing the side of the substrate carrying the developed photoresist layer, and a station for applying a metal coating. The substrates to be processed are moved from one station to the next one by a transport means for gripping a substrate, which transport means is movable in a horizontal plane to directions including an angle with each other and which is also capable of moving upward and downward within the housing.

In other known systems, the treating stations are arranged in a circular way. In WO 97/39449, a device for manufacturing disc-shaped information carriers is disclosed, the device comprising a plurality of module-shaped treating stations which are removable put together in a closable housing. The device includes a transport device which is horizontally and vertically movable, said transport means being for picking up/delivery of a substrate to be treated or a treated substrate, respectively, and for transporting the same from station to station.

Mastering may also be performed by using a phase transition mastering process. A method for mastering using a phase transition in a dielectric layer is disclosed, for example, in WO 2006/072895. In order to provide a master substrate for making a stamper for the mass-fabrication of optical discs or a master substrate for creating a stamp for micro-contact printing, a recording stack comprising a dielectric layer and means for supporting heat induced phase transitions within the dielectric layer is provided and a heat-induced phase transition is caused in regions of the dielectric layer where pits are to be formed, by applying laser pulses. The regions of the dielectric layer which experienced a phase transition or those which have not experienced a phase transition are then removed by an etching process. The layer sensitive for phase transitions is typically a ZnS-SiOₓ sensitive layer.

An integrated mastering system using a phase transition mastering process typically comprises a loading/unloading unit, a unit which combines cleaning and developing, a sputtering unit and a laser beam recorder. A handler is used for transporting the substrates to be processed from one treating station to the next one. The handler may be a standard type which can rotate and translate to transport the discs.

### The standard sequence of a substrate through the mastering system is the following:

First, the substrate is loaded to the system. This may be done using a cassette containing a single master disc which is manually brought into position and opened, from which the handler can take out the master disc and return a finished disc. It is also possible to load the substrates using a cassette with multiple discs, for example, a cassette with ten discs which is placed inside the process area.

The surface of the master disc is then cleaned in a first process step. This may be done by using a brush. After cleaning, the phase transition layer, for example, ZnS-SiOₓ, is deposited on the substrate in a RF sputtering process. For recording at a laser wavelength of 405 nm, an additional thin silicon layer is applied on the substrate before the phase transition layer is deposited.

A laser beam recorder illuminates the phase transition layer on the substrate in a desired pattern by moving a focused laser spot over the substrate. After recording the information, the phase transition layer is developed using a developer solution which may be acid or alkaline.

A metal layer, for example Ni, is then sputtered on the substrate to finalize the master disc. If an empty cassette is available at the unload position, the finalized substrate is output from the mastering systems.

US 2003/223322 A1 discloses a method according to the preamble of claim 1.

It is an object of the present invention to provide a method for controlling the handling of the substrate in an integrated mastering system. In particular, the method of the present invention should provide simplicity and flexibility in control and a high throughput of substrates through the integrated mastering system.

These objects are achieved with the features of the claims.

According to the method of the present invention, any substrate which is processed in the various treating stations of the integrated mastering system is moved from each treating station to the stack before being moved to the next treating station instead of directly moving the substrates from one treating station to the next one. The handler thus only performs two different movements, namely unloading a substrate from a treating station and loading it into the buffer and unloading a substrate from the buffer and loading it into the next treating station. The integrated mastering system which is adapted to perform the method of the present invention thus includes, in addition to the treating stations and the handler, a buffer or stack for temporarily storing the substrates which are only partially processed.

The method of the present invention is preferably performed on an integrated mastering system using a phase transition mastering process as described above. The standard handling sequence according to the present invention in such an integrated mastering system is thus the following sequence:
- loading the substrate from the loading/unloading unit, preferably via the cleaning station, to the buffer,
- moving the substrate from the buffer to the sputtering unit for depositing the phase transition layer on the substrate, to the buffer,
- moving the substrate from the buffer to the recorder, to the buffer,
- moving the substrate from the buffer to the developer, to the buffer,
- moving the substrate from the buffer to the sputtering unit for metallizing the substrate, to the buffer, and
- moving the substrate from the buffer to the loading/unloading unit if an empty cassette is available.

A scheduler may be provided which is adapted to perform the control of the integrated mastering system according to the present invention. The scheduler may be provided with a signal every time an operation in a treating station has been completed. When the movement of a substrate has been finished, the handler will signal that it is available for a next movement and the scheduler decides which movement the handler will perform next. This decision may be based on the list of rules which may be sorted by priority with the highest priority rule at the top of the list. The scheduler thus always checks the list of rules from the top.

Critical to a successful operation of the buffer control is to know the status of each partially processed substrate in the buffer. That is, an information is needed for each substrate in the buffer which process step is next to be performed. The priority rules are preferably based on the status of the substrates in the buffer. Preferably, the scheduler follows the general rule that those substrates which have a product status that is closest to the finished product, that is, the substrate that is closest to be ready to exit via the loading/unloading station is moved first. Furthermore, in order to further optimize the control of the handler, moving a substrate from the buffer to a process station has a higher priority than moving a substrate from a process station to the buffer. It is also possible to assign the movements of those substrates a higher priority that will have, as a next process step, a process that takes longer than other processes. With this rule, it is achieved that the process station which performs this bottleneck process which takes longer than any other process works for the maximum possible time and preferably substantially continuously. There may be exceptions to these rules which allow, for example, to define a specific substrate to be a rush substrate which is treated with the highest priority so that the shortest possible throughput time is achieved for such a substrate. Furthermore, the loading/unloading station may be treated such that a cassette comprising multiple substrates loaded in the system is emptied in a certain maximum time.

The method according to the present invention including controlling the status of each substrate in the buffer is easy to implement. The above simple set of priority rules to control the system yields to an optimized output of the integrated mastering system according to the present invention. With the present invention, it is not needed to continuously verify the status of the various processes and to determine, via complex priority rules, which action should follow. With the method of the present invention it is only necessary to determine the status of the substrates in the buffer and to choose the substrate which has had most process steps and to see whether the next process station for that substrate is available.

It is a further advantage of the method of the present invention that changes in process times in the various processing stations, whether by format or system improvements, have no impact on the priority rules. Adding additional processes requires only an additional process position in the standard process sequence. In case the bottleneck process, that is the process that takes the longest processing time, would change, the scheduler can simply be modified by moving the bottle neck station rule higher on the list. This, however, is unlikely given the high recorder times needed.

In case a substrate is loaded to the system that should be finalized as soon as possible, this can simply be realized by giving that specific substrate the rush status so that it will be scheduled with the highest priority. The method of the present invention is particularly advantageous when different substrates requiring different processing times are treated simultaneously in the integrated mastering system. The size of the buffer should be dimensioned to be no limiting factor and should even allow to accommodate unattended shifts.

Even though the above description was made with regard to an integrated mastering system using phase transition mastering, the method of the present invention may equally be applied to an integrated mastering system using a photosensitive layer.

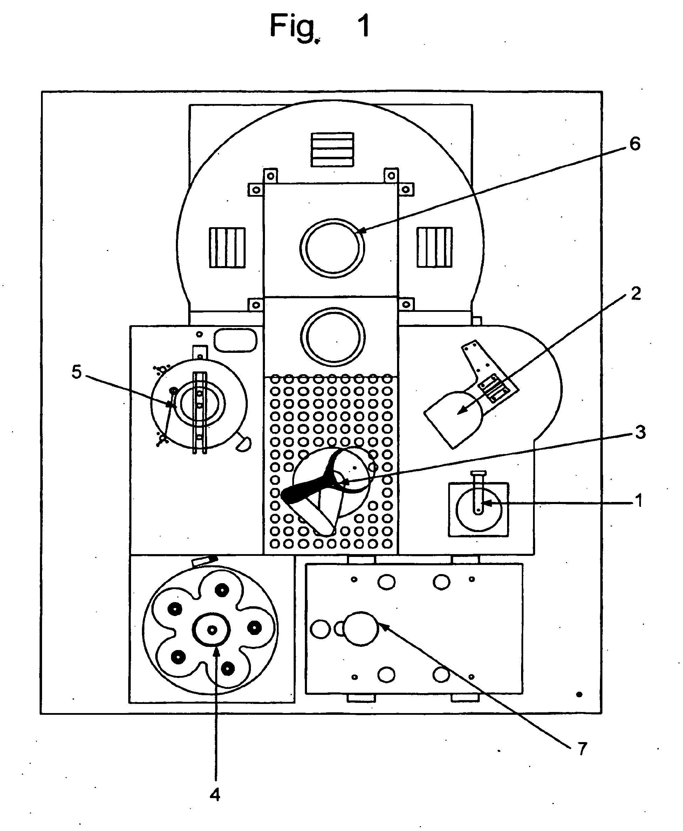

In the following, the present invention will be described in more detail with reference to Figure 1 which schematically shows an integrated mastering system according to the present invention.

As shown in Figure 1, the integrated mastering system according to the present invention includes the station 2 for loading several substrates in a cassette, for example, 20 substrates per cassette. The substrates may also be loaded to the system one by one in the loading/unloading station 1. A finalized substrate is unloaded from the system via station 1 in a cassette holding a single substrate. The system further includes a combined cleaning/developing station 5. Station 5 may further include means for quality control of the developed substrate. Preferably the substrate is cleaned before it is stored in the buffer in order to prevent contamination of the system and/or other substrates.

Sputtering unit 6 may be a sputtering unit which is applied in a standard RF sputtering process the ZnS-SiOₓ layer on the substrate. For recording at a laser wavelength of 405 nm, an additional thin Si layer is applied on the substrate before the dielectric ZnS-SiOₓ layer is deposited on the substrate. With the sputtering unit 6, also metallizing the developed layer will be performed by depositing, for example, Ni on the developed layer.

The system further comprises laser beam recorder 7 and buffer 4. The buffer 4 preferably provides space for as much as 100 substrates so that the buffer does not present a limiting factor for the method according to the present invention.

The handler 3 may be a standard type handler which can rotate and translate to transport the substrates from one station to another. As can be seen in Figure 1, the various stations are preferably arranged substantially in a circular way so that the transport time between the various stations and the buffer may be minimized.

Table 1 summarizes the different process steps which are performed in order in the different treating stations of the integrated mastering system. In Table 1, for each process step, the station which performs the respective process step is indicated. Furthermore, the processing time of each process step is given. In Table 1, the typical process times for producing a DVD master are given. The total process time for a DVD including the time necessary for the transport between the stations is approximately 2550 s. For comparison, the recording process time for producing a HD DVD master is 3600 s, for a Blu-ray Disc master the recording process time is approximately 6000 s.

**Table 1:**

| Process step | Station | Processing time |
|---|---|---|
| Load single substrate or | 1 | 15 |
| Load substrate from cassette | 2 | 30 |
| Cleaning | 5 | 105 |
| Sputter phase transition layer | 6 | 300 |
| Recording | 7 | 900 |
| Developing and | 5 | 400 |
| Quality control | 5 | 200 |
| Sputter metal layer | 6 | 300 |
| Unloading | 1 | 15 |

Combining the general priority rules according to the present invention may lead to the following sequence of priority rules followed by the scheduler in an integrated mastering system using a phase transition mastering process:
- If a rush substrate is in the buffer 4 then move the rush substrate to the respective treating station, otherwise
- if a substrate is in the buffer 4 for process step recording and the recorder 7 is available then move the substrate to the recorder 7, otherwise
- if a substrate is ready in the recorder 7 then move the substrate to the buffer 4, otherwise
- if a substrate is in the buffer 4 for the process step unloading and the loading/unloading station 1 is available and an empty cassette is present in the loading/unloading station1 then unload the substrate, otherwise
- if a substrate is in the buffer 4 for the process step metallizing the substrate and the sputtering unit 6 is available then move the substrate to the sputtering unit 6, otherwise
- if a substrate is in the buffer 4 for the process step developing and the developer 5 is available then move the substrate to the developer 5, otherwise
- if a substrate is in the buffer 4 for the process step depositing the phase transition layer and the sputtering unit 6 is available then move the substrate to the sputtering unit 6, otherwise
- if a cassette including a new substrate is in the loading/unloading station 1, 2 and the cleaner 5 is available then move one substrate from the loading/unloading station 1, 2 to the cleaner 5, otherwise
- if a substrate is ready on the sputtering unit 6 after the process step metallization then move the substrate to the buffer 4, otherwise
- if a substrate is ready on the cleaning and developing station 5 after the process step development then move the substrate to the buffer 4, otherwise
- if a substrate is ready on the sputtering unit 6 after the process step depositing the phase transition layer then move the substrate to the buffer 4, otherwise
- if a substrate is ready on the cleaning and developing station after the process step cleaning then move the substrate to the buffer 4, otherwise
- wait for the next event.

The above sequence is performed every time the handler 3 has finished an action and is free for the next one or a process station signals that it is ready to unload. It should be noted that in the above list of priority rules, the step of recording the substrate does not meet the general rule that the product status that is closest to the finished product has a priority over a product that need earlier process steps. The reason is that the recording step is the process step which takes the longest time. In case that during the above sequence more than one substrate has the same status, the time of entry decides. In other words, the priority list is processed on a first-come-first-served basis.

The control method according to the present invention including the priority rules given above has been tested with a simulation model based on the processing times for the different processes given in Table 1. For each transport of a substrate using the handler from a treating station to the stack or from the stack to a treating station, a processing time of 30 s was assumed. Different scenarios with different priority rules were tested. As a result, the above-mentioned priority rules gave the best result in terms of utilization of the bottle neck process, that is the recording of the disc, output per day, and handling loading, unloading and recording simultaneously.

In Table 2, the utilization of the different treating stations is summarized. Also the processing times in each station are indicated. The process having the longest processing time, that is the recording, is utilized for 94% of the total time, that is, the recorder is nearly fully occupied. During normal operation of the integrated mastering system, that is, when several substrates are treated simultaneously in the system, the total time for a substrate to be fully processed is 2550 s on the average.

**Table 2:**

| Station | | Processing time | Utilization |
|---|---|---|---|
| 1 | Loading/Unloading unit | 15 | 2% |
| 2 | Loading from cassette | 30 | 3% |
| 3 | Handler (11 times) | 330 | 34% |
| 4 | Buffer | 0 | 0% |
| 5 | Cleaner/Developer/Quality Control | 705 | 73% |
| 6 | Sputtering Unit | 600 | 63% |
| 7 | Recorder | 900 | 94% |

## Claims

1. A method for controlling handling of a plurality of substrates to be processed in an integrated mastering system comprising various treating stations to be passed through by the substrates in a predetermined order, a buffer (4) for temporarily storing the substrates and a handler (3) for moving the substrates between the buffer and the treating stations, **characterized in that** each one of plurality of substrates is moved to the buffer upon completion of processing in each one of said treating stations.

2. The method according to claim 1, wherein, upon moving a substrate to the buffer, the next action of the handler is determined based on a priority rule.

3. The method according to claim 2, wherein the priority rule is based on a status information of each substrate in the buffer.

4. The method according to claim 3, wherein the status information comprises information which treating process is performed next.

5. The method according to claims 2 to 4, wherein moving of a substrate from the buffer to a process station has a higher priority than moving a substrate from a process station to the buffer.

6. The method according to claim 4 or 5, wherein a substrate in the buffer having a status which is closer to being finalized than another substrate has a higher priority to be moved from the buffer to the respective treating station than the another substrate.

7. The method according to claim 4, 5 or 6, wherein moving a substrate from the buffer to a treating station for performing a treatment that takes longer than the upcoming treatment of another substrate has a higher priority than moving the another substrate.

8. The method according to any of claims 2 to 7, wherein, in case a new substrate is available in a loading station to be loaded to the system, moving the handler to load the new substrate to the system has the highest priority.

9. The method according to any one of claims 2 to 8, wherein a substrate is selected wherein moving the selected substrate has a higher priority than moving any other substrate in the system.

10. An integrated mastering system comprising various treating stations to be passed through by substrates to be treated in a predetermined order, a buffer (4) for temporarily storing the substrates, and a handler (3) for moving the substrates between the treating stations and the buffer, **characterized by** a scheduler for controlling the handler according to the method of any one of the preceding claims.

11. The integrated mastering system according to claim 10, wherein the treating stations include a loading/unloading station (1, 2), a cleaning and developing station (5), a sputtering station (6) and a laser beam recorder (7).

## Patentansprüche

1. Verfahren zur Steuerung der Handhabung mehrerer Substrate, die in einem integrierten Mastering-System zu verarbeiten sind, das mehrere Behandlungsstationen, die von den Substraten in einer vorgegebenen Reihenfolge zu durchlaufen sind, einen Puffer (4) zur vorübergehenden Speicherung der Substrate und eine Manipuliervorrichtung (3) zur Beförderung der Substrate zwischen dem Puffer und den Behandlungsstationen aufweist, **dadurch gekennzeichnet, daß** jedes der mehreren Substrate nach Abschluß der Verarbeitung in jeder der Behandlungsstationen zum Puffer befördert wird.

2. Verfahren nach Anspruch 1, wobei nach Beförderung eines Substrats zum Puffer die nächste Aktion der Manipuliervorrichtung auf der Basis einer Prioritätsregel festgelegt wird.

3. Verfahren nach Anspruch 2, wobei die Prioritätsregel auf einer Zustandsinformation zu jedem Substrat im Puffer basiert.

4. Verfahren nach Anspruch 3, wobei die Zustandsinformation eine Information darüber aufweist, welcher Behandlungsprozeß als nächster ausgeführt wird.

5. Verfahren nach einem der Ansprüche 2 bis 4, wobei die Beförderung eines Substrats vom Puffer zu einer Prozeßstation eine höhere Priorität hat als die Beförderung eines Substrats von einer Prozeßstation zum Puffer.

6. Verfahren nach Anspruch 4 oder 5, wobei ein Substrat im Puffer mit einem Zustand, welcher der Fertigstellung näher kommt als der eines anderen Substrats, für die Beförderung vom Puffer zu der jeweiligen Behandlungsstation eine höhere Priorität hat als das andere Substrat.

7. Verfahren nach Anspruch 4, 5 oder 6, wobei die Beförderung eines Substrats vom Puffer zu einer Behandlungsstation für die Durchführung einer Behandlung, die länger dauert als die bevorstehende Behandlung eines anderen Substrats, eine höhere Priorität hat als die Beförderung des anderen Substrats.

8. Verfahren nach einem der Ansprüche 2 bis 7, wobei, falls ein neues Substrat in einer Ladestation zum Laden in das System verfügbar ist, die Bewegung der Manipuliervorrichtung zum Laden des neuen Substrats in das System die höchste Priorität hat.

9. Verfahren nach einem der Ansprüche 2 bis 8, wobei ein Substrat ausgewählt wird, dessen Beförderung eine höhere Priorität hat als die Beförderung irgendeines anderen Substrats in dem System.

10. Integriertes Mastering-System, das verschiedene Behandlungsstationen, die von zu behandelnden Substraten in einer vorgegebenen Reihenfolge zu durchlaufen sind, einen Puffer (4) zur vorübergehenden Speicherung der Substrate und eine Manipuliervorrichtung (3) zum Befördern der Substrate zwischen den Behandlungsstationen und dem Puffer aufweist, **gekennzeichnet durch** ein Organisationsprogramm zur Steuerung der Manipuliervorrichtung gemäß dem Verfahren nach einem der vorstehenden Ansprüche.

11. Integriertes Mastering-System nach Anspruch 10, wobei die Behandlungsstationen eine Lade-/Entlade-Station (1, 2), eine Reinigungs- und Entwicklungsstation (5), eine Sputterstation (6) und ein Laserstrahl-Aufzeichnungsgerät (7) einschließen.

## Revendications

1. Procédé pour commander la manipulation d'une pluralité de substrats destinés à être traités dans un système de gravure intégré comprenant divers postes de traitement à travers lesquels les substrats doivent passer dans un ordre prédéterminé, un stock tampon (4) pour stocker les substrats temporairement et un manipulateur (3) pour déplacer les substrats entre le stock tampon et les postes de traitement, **caractérisé en ce que** chacun parmi la pluralité de substrats est déplacé jusqu'au stock tampon lors de l'achèvement du traitement dans chacun parmi lesdits postes de traitement.

2. Procédé selon la revendication 1, dans lequel, lors du déplacement d'un substrat jusqu'au stock tampon, l'action suivante du manipulateur est déterminée sur la base d'une règle de priorité.

3. Procédé selon la revendication 2, dans lequel la règle de priorité est fondée sur une information de statut de chaque substrat dans le stock tampon.

4. Procédé selon la revendication 3, dans lequel l'information de statut comprend une information indiquant le traitement qui est réalisé par la suite.

5. Procédé selon les revendications 2 à 4, dans lequel le déplacement d'un substrat du stock tampon à un poste de traitement présente une priorité plus élevée que le déplacement d'un substrat d'un poste de traitement au stock tampon.

6. Procédé selon la revendication 4 ou 5, dans lequel un substrat dans le stock tampon présentant un statut qui est plus près d'être finalisé qu'un autre substrat présente une priorité plus élevée pour être déplacé du stock tampon au poste de traitement respectif que l'autre substrat.

7. Procédé selon la revendication 4, 5 ou 6, dans lequel le déplacement d'un substrat du stock tampon à un poste de traitement pour réaliser un traitement qui prend plus de temps que le traitement suivant d'un autre substrat présente une priorité plus élevée que le déplacement de l'autre substrat.

8. Procédé selon une quelconque des revendications 2 à 7, dans lequel, au cas où un nouveau substrat est disponible dans un poste de chargement pour être chargé dans le système, le déplacement du manipulateur pour charger le nouveau substrat dans le système présente la priorité la plus élevée.

9. Procédé selon une quelconque des revendications 2 à 8, dans lequel un substrat est sélectionné dans lequel le déplacement du substrat sélectionné présente une priorité plus élevée que le déplacement de tout autre substrat dans le système.

10. Système de gravure intégré comprenant divers postes de traitement à travers lesquels des substrats destinés à être traités doivent passer dans un ordre prédéterminé, un stock tampon (4) pour stocker les substrats temporairement, et un manipulateur (3) pour déplacer les substrats entre les postes de traitement et le stock tampon, **caractérisé par** un ordonnanceur pour commander le manipulateur conformément au procédé selon une quelconque des revendications précédentes.

11. Système de gravure intégré selon la revendication 10, dans lequel les postes de traitement comprennent un poste de chargement/déchargement (1, 2), un poste de nettoyage et de développement (5), un poste de pulvérisation (6) et un dispositif d'impression par rayon laser (7) .
